**Europäisches Patentamt**

**European Patent Office**

**Office européen des brevets**

(19)

(11) Numéro de publication: **0 182 726**
**B1**

(12) **FASCICULE DE BREVET EUROPÉEN**

(45) Date de publication du fascicule du brevet:
**13.07.88**

(21) Numéro de dépôt: **85420205.8**

(22) Date de dépôt: **14.11.85**

(51) Int. Cl.⁴: **C 22 B 60/02, C 01 G 43/06**

(54) **Procédé de récupération sous forme de fluorure tétravalent de l'uranium extrait de solutions phosphatées avec ajout d'ions métalliques.**

(30) Priorité: **16.11.84 FR 8417994**

(43) Date de publication de la demande:
**28.05.86 Bulletin 86/22**

(45) Mention de la délivrance du brevet:
**13.07.88 Bulletin 88/28**

(84) Etats contractants désignés:
**BE FR NL SE**

(56) Documents cités:
**FR - A - 1 293 966**
**US - A - 2 869 979**
**US - A - 2 882 123**
**US - A - 3 004 051**
**US - A - 4 374 807**

(73) Titulaire: **URANIUM PECHINEY, Tour Manhattan, La Défense 2, 6, place de l'Iris,, F-92400 Courbevoie (FR)**

(72) Inventeur: **Floreancig, Antoine, Chemin du Clos Chipier, F-69230 Saint-Genis-Laval (FR)**

(74) Mandataire: **Vanlaer, Marcel et al, PECHINEY 28, rue de Bonnel, F-69433 Lyon Cédex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de récupération de l'uranium qui a été extrait d'une solution aqueuse phosphatée au moyen d'un solvant organique et que l'on réextrait dudit solvant sous forme de fluorure tétravalent au moyen d'acide fluorhydrique et d'ions métalliques.

Les solutions phosphatées et notamment l'acide phosphorique obtenus par attaque sulfurique de minerais phosphatés contiennent, selon l'origine du minerai, une quantité d'uranium comprise généralement entre 0,040 et 0,200 g/l.

En raison du grand intérêt présenté par l'uranium dans l'industrie nucléaire, de nombreux procédés ont été mis au point pour récupérer ce métal à partir de ces solutions.

Certains de ces procédés consistent à extraire l'uranium sous forme hexavalente au moyen de solvants organophosphorés tels que les mélanges d'acide di-2-éthylhexylphosphorique et d'oxyde de trioctylphosphine, mélange communément appelé Di-2-EHPA + TOPO et décrit, par exemple, dans le brevet US 3 711 951.

D'autres procédés recourent à l'extraction de l'uranium sous la forme tétravalente au moyen d'autres solvants organophosphorés comme, par exemple, les mélanges d'acides mono et dioctylphénylphosphorique dans le procédé dit O.P.A.P. ou les acides alkylpyrophosphoriques comme l'acide octylpyrophosphorique dans le procédé dit O.P.P.A.

De tels procédés sont évoqués dans les brevets US 3 835 214 et belge 870 346 en ce qui concerne l'O.P.A.P. et l'US 2 866 680 pour l'O.P.P.A.

Dans le cas des procédés où l'uranium est récupéré sous la forme tétravalente, on soumet généralement le solvant organophosphoré chargé en uranium à une opération de réextraction au moyen d'une solution aqueuse d'acide fluorhydrique de manière à pouvoir faire passer cet uranium dans ladite solution à l'état d'une suspension de grains de fluorure et à le récupérer ensuite de cette dernière après séparation du solvant.

C'est ainsi que dans le cas où on met en œuvre un solvant tel que l'acide octylpyrophosphorique, l'uranium qu'il contient est réextrait par une solution d'acide fluorhydrique à 15% en poids à l'état d'une suspension d'$UF_4,2,5H_2O$. Mais, ce fluorure se présente souvent sous forme d'aiguilles très fines formant avec les eaux mères acides et le solvant une émulsion thixotrope dont les composants sont très difficiles à séparer par décantation et filtration de sorte qu'on est obligé de recourir le plus souvent à la centrifugation pour le récupérer.

Or, centrifuger en milieu fluorhydrique relativement concentré, une émulsion de deux phases liquides et une phase solide s'avère être un problème quasi insoluble avec le matériel dont on dispose actuellement. Même si l'on y parvient, on laisse néanmoins dans le solvant une quantité relativement importante de fluorure et on recueille finalement un fluorure contenant encore une forte proportion d'eaux mères qu'il faut soumettre à une opération de séchage. Ce sont là autant d'inconvénients qui contribuent à grever le prix de revient de l'uranium récupéré.

La demanderesse ayant fait l'expérience de ces difficultés à cherché pour y parer à obtenir une forme différente de fluorure présentant des grains plus gros et plus denses qui se séparent plus aisément du solvant et se prêtent à la filtration.

Ses recherches ont abouti à la mise au point d'un procédé de récupération, sous la forme d'un fluorure tétravalent, de l'uranium contenu dans les solutions phosphatées comportant les étapes suivantes:

a) réduction à l'état tétravalent de l'uranium contenu dans la solution,

b) extraction dudit uranium de la solution au moyen d'un solvant organique choisi parmi les acides alkylpyrophosphoriques dilués dans un hydrocarbure,

c) réextraction de l'uranium du solvant au moyen d'une solution aqueuse d'acide fluorhydrique,

d) séparation du solvant désuranié de l'émulsion formée en (c) et recyclage dudit solvant à l'extraction avec un appoint de solvant frais,

e) récupération du fluorure de la suspension aqueuse obtenue en (d). Ce procédé est caractérisé en ce que l'on introduit des ions sodium dans la solution de réextraction utilisée en c), à une concentration supérieure à 0,2 g/l.

L'invention se distingue donc des procédés connus par la présence d'ions sodium dans la solution d'acide fluorhydrique utilisée à la réextraction de l'uranium.

Cette façon d'opérer résulte de l'observation faite par la demanderesse suivant laquelle de tels ions conduisaient, au contact du solvant chargé en uranium, à la formation d'une suspension de grains de sel double de formule $UF_4,xNaF$, lesquels à la différence du sel $UF_4,2,5H_2O$ se formant avec l'acide fluorhydrique seul étaient beaucoup plus denses, non thixotropes et non aciculaires, de sorte que leur séparation du solvant était plus aisée et qu'on pouvait les récupérer facilement par filtration sans devoir recourir aux techniques de centrifugation et à leurs inconvénients.

Ces ions sodium sont introduits dans la solution aqueuse d'acide sous forme de composés dudit élément tel que l'hydroxyde NaOH ou le fluorure de sodium par exemple. Cette solution aqueuse provient généralement des eaux mères issues de la suspension après qu'on ait récupéré le fluorure et à laquelle on fait un appoint d'acide fluorhydrique frais pour compenser la consommation due à la transformation en fluorure de l'uranium contenu dans le solvant.

Mais, on a constaté que l'introduction de ces ions dans les eaux mères contenant encore des grains de fluorure en suspension permettait, d'une part d'accroître davantage la dimension des grains de fluorure et donc d'améliorer la vitesse de filtration, et d'autre part de réduire plus fortement la quantité d'uranium restant dans le solvant puisqu'on pouvait atteindre des teneurs inférieures à 0,050 g/l, atteignant parfois 0,020 g/l.

C'est pourquoi, l'invention comprend également une variante dans laquelle la solution aqueuse destinée à la réextraction est formée par une fraction de la suspension obtenue immédiatement après séparation du solvant désuranié et que l'on recycle à la réextraction après ajout d'acide fluorhydrique frais; la fraction résiduelle de la suspension étant traitée pour en récupérer le fluorure et donner des eaux mères que l'on recycle également au moins en partie.

Poursuivant ses travaux sur les conditions de la formation de graines de fluorure ayant des propriétés favorables à leur séparation, la demanderesse a trouvé qu'un progrès substantiel pouvait encore être fait en ajoutant aux ions sodium des ions aluminium et/ou magnésium. En effet, ces ions contribuent à modifier la forme cristalline et la dimension des grains de fluorure dans le sens de l'obtention d'une plus grande vitesse de filtration.

Ces ions peuvent être introduits sous forme de l'élément lui-même ou de composés soit dans les eaux mères issues de la séparation du fluorure, soit dans la fraction de la suspension auxquelles on a fait les appoints nécessaires d'acide fluorhydrique et d'ions sodium frais, sachant qu'au cours du recyclage des appoints en ions aluminium et magnésium sont alors également nécessaires.

Ces appoins sont réalisés de manière à maintenir dans la solution ou la suspension aqueuse de réextraction une concentration en HF comprise entre 8 et 16% en poids, et de préférence entre 9 et 13%, et en sodium comprise entre 0,2 et 20 g/l et de préférence entre 0,5 et 5 g/l car on a constaté qu'en dessous de 0,2 g/l l'addition de sodium se révélait inopérante tandis qu'au delà de 20 g/l la concentration était trop importante et nuisait à la formation de grains de forme convenable.

Lorsqu'on recycle la suspension, on s'arrange pour que celle-ci contienne entre 10 et 300 g/l et de préférence entre 20 et 150 g/l de matières solides quand elle entre en contact avec le solvant à désuranier.

Quant aux ions aluminium et magnésium, ils se sont avérés avoir un effet optimum dans la fourchette de concentration comprise entre 0,05 et 5 g/l avec une préférence néanmoins pour la concentration 0,1 à 1 g/l.

Le volume de solution ou de suspension de réextraction n'est pas critique: il peut être compris entre 0,2 et 5 fois le volume de solvant à traiter, toutefois, on préfère utiliser la fourchette 1 à 2.

Du point de vue de la température, bien qu'une élévation contribue généralement à améliorer la séparation des phases, il est souhaitable d'opérer la réextraction entre 10 et 30°C afin de réduire au minimum la dégradation du solvant par l'acide fluorhydrique.

Quant aux autres étapes du procédé, elles sont réalisées de manière classique, à savoir:

Avant extraction de l'uranium, la solution de phosphates, résultant de l'attaque du minerai est soumise à l'action d'un réducteur tel que le fer, par exemple, dont la fonction est d'amener l'uranium à la valence 4. On utilise soit du fer en poudre qui est mis en contact avec la solution dans un réacteur agité, soit des plaquettes (tôles par exemple) disposées dans une colonne à l'intérieur de laquelle on fait circuler la solution.

Le solvant organique mis en œuvre pour extraire l'uranium de ladite solution est choisi parmi les acides alkylpyrophosphoriques tel que, de préférence, l'acide décylpyrophosphorique ou l'acide octylpyrophosphorique.

Ces acides sont ceux qui présentent le meilleur comportement lors de la mise en œuvre du présent procédé et ils sont employés à l'étât dilué dans un hydrocarbure aliphatique et/ou aromatique.

Le solvant, après avoir été désuranié par l'acide fluorhydrique, est séparé de la suspension aqueuse et de préférence recyclé à l'étape d'extraction après introduction d'un appoint de solvant frais correspondant à la quantité qui a été dégradée par ledit acide.

La suspension aqueuse issue de l'étape de réextraction est soumise à une étape de séparation au cours de laquelle l'uranium est récupéré sous forme de fluorure solide.

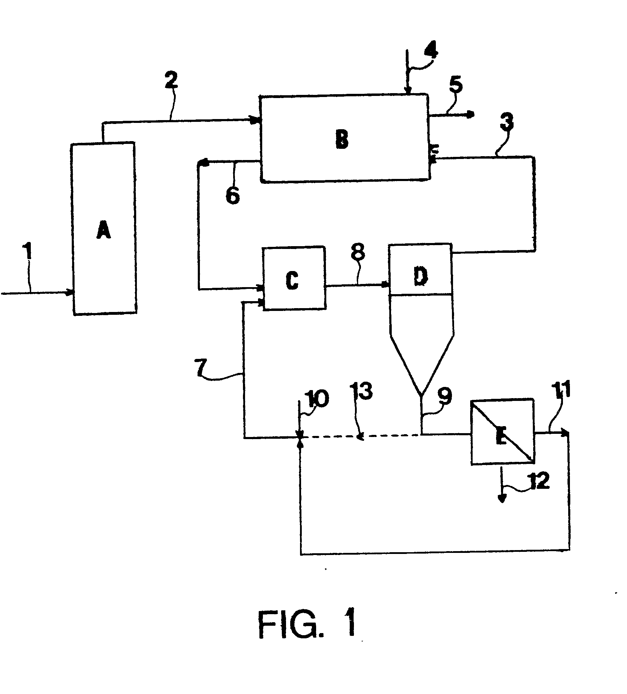

L'invention sera mieux comprise à l'aide du schéma de principe représenté sur la figure jointe.

La solution phosphatée uraniée (1) provenant de l'attaque du minerai par l'acide sulfurique est introduite dans la colonne de réduction (A) garnie de plaquettes de fer pour donner une solution (2) dite «réduite» dans laquelle l'uranium est à l'état tétravalent. Cette solution est traitée à contre-courant dans une batterie d'extraction (B) par un courant de solvant organique (3) recyclé et d'un appoint de solvant pur (4) pour donner une solution phosphatée désuraniée (5) et un courant de solvant (6) chargé en uranium.

La batterie d'extraction (B) peut être une batterie de mélangeurs décanteurs, une colonne d'extraction pulsée ou agitée, une batterie d'extracteurs centrifuges ou encore un extracteur centrifuge multiétages.

Le solvant (6) est envoyé dans la batterie de réextraction (C) qui est alimentée par ailleurs avec un courant (7) d'une solution aqueuse d'acide fluorhydrique contenant les ions sodium seuls ou additionnés d'ions aluminium et/ou magnésium et en présence ou non d'une suspension de grains de fluorure.

De (C) sort une émulsion (8) qui est envoyée dans un décanteur (D) où s'effectue la séparation d'une part du solvant désuranié (3) qui est recyclé vers (B), d'autre part de la suspension (9) de fluorure. Cette suspension est filtrée en (E) pour donner des eaux mères (11) lesquelles, après remise aux concentrations souhaitées en HF, sodium, aluminium et/ou magnésium au moyen de l'appoint (10), sont recyclées en (7) vers (C) tandis qu'en (12) on récupère l'uranium sous forme de fluorure double.

Mais suivant la variante de l'invention, on peut recycler directement en (C) la suspension (9) par le circuit (13) tout en maintenant l'appoint (10).

L'invention est illustré à l'aide des exemples d'application suivants:

*Exemple 1*

1 litre de solvant formé d'O.P.P.A. diluée à 3% dans du kérosène et contenant 1,1 g/l d'uranium est soumis à l'étape de réextraction au moyen d'une solution d'HF à 12% contenant 5 g/l d'ions sodium. On recueille un solvant désuranié qui contient 0,200 g/l d'uranium et une suspension d'UF₄,xNaF qui est réciclée à la réextraction avec un appoint d'HF à 70% en poids et de soude à 30% en poids. Au bout de trois cycles, on constate que les grains initialement très fins deviennent de plus en plus denses et se séparent plus rapidement des phases organique et aqueuse.

Au bout du 8ème cycle, la teneur en uranium du solvant a été ramenée à 0,040 g/l tandis que la suspension contenait 21 g/l de solide. Cette dernière a été filtrée sur Büchner et sous une différence de pression de 0,05 MPa avec une vitesse de 1,1 m³/m².h.

Le même essai a été réalisé en l'absence d'ions sodium. Au bout de 8 cycles, le solvant contenait encore 0,080 g/l d'uranium et la suspension recueillie qui était chargée à 19,8 g de solide ne filtrait qu'avec une vitesse de 0,09 m³/m².h.

L'examen au microscope des produits obtenus dans les deux cas montrait que la majorité des grains avait une dimension comprise entre 5 et 10 µm pour l'essai en présence d'ions sodium tandis qu'elle était de 0,2 µm en leur absence.

### Exemple 2

Cet exemple est relatif à l'ajout simultané d'ions sodium, aluminium et magnésium. le solvant de l'exemple 1 ayant une charge identique d'uranium a été traité dans les mêmes conditions mais, au moyen d'une solution de réextraction à 12% d'HF contenant 1 g/l Na, 0,1 g/l Al et 0,1 g/l Mg.

Au bout du 2ème cycle, on a obtenu des grains très denses ayant une dimension moyenne de 10 à 20 µm se séparent très facilement de la phase aqueuse. Un essai de filtration effectué après le 8ème cycle a donné une vitesse de 1,8 m³/m².h. La teneur en uranium du solvant n'était plus que de 0,050 g/l alors qu'il était de 0,210 g/l après le 1er cycle.

### Exemple 3

Dans cet exemple, on se réfère à la figure jointe. L'acide phosphorique (1) ayant été réduit dans la colonne (A) a donné une solution (2) de composition suivante (en % en poids):

| | |
|---|---|
| P₂O₅ | 27 |
| SO₄ | 1,6 |
| F | 0,9 |
| Ca | 0,4 |
| Fe²⁺ | 0,47 |
| Fe³⁺ | 0,12 |
| U | 0,083 (soit 0,108 g/l) |

Cette solution a été soumise à l'opération d'extraction à contre-courant dans une batterie de deux mélangeurs décanteurs (B) par un courant (C) d'un solvant formé de 3% d'acide octylpyrophosphorique dilué dans du kérosène provenant du décanteur (D) de réextraction. Les débits étaient de 300 l/h pour l'acide et 20 l/h pour le solvant recyclé.

En (4), on a intraduit un courant de 0,33 l/h de solvant frais contenant 500 g d'O.P.P.A. par litre de kérosène pour compenser les pertes de dégradation.

La solution d'acide phosphorique désuranié (5) ne contenait plus que 0,005 g/l d'uranium.

Le solvant chargé (6) renfermant 1,55 g/l d'uranium a été traité en (C) par un courant de 35 l/h d'une suspension (7) formée d'acide fluorhydrique à 12% en poids, 1 g/l d'ions sodium et de 100 g/l de solide.

L'émulsion (8) sortant de (C) a été envoyée dans le décanteur (D) pour donner un solvant (3) ne contenant plus que 0,045 g/l d'uranium et qui a été recyclé en (B) et une suspension (9) qui a été envoyée directement en (C) par (13) après remise au titre en HF et Na par addition en (10) d'HF à 70% et de NaOH à 30%.

Une fraction de la suspension (%) a été filtrée et lavée en (E) pour donner des eaux mères (12) recyclées vers (C) et de l'uranium récupéré sous la forme de fluorure (13). La vitesse de filtration de cette suspension a été de 1,4 m³/m².h sous une différence de pression de 0,05 MPa.

L'examen au microscope des grains obtenus a montré que ceux-ci avaient une dimension moyenne de 16 µm et leur analyse élémentaire après lavage donnait les chiffres suivants:

% en poids

| U | F | Na | Al | Mg | Th | Yb | P | Fe |
|---|---|---|---|---|---|---|---|---|
| 43,6 | 28,9 | 5,15 | 0,6 | 0,6 | 5,3 | 0,4 | <0,1 | <0,12 |

Cette invention trouve son application notamment dans la récupération de l'uranium contenu dans l'acide phosphorique quand on veut obtenir, avec un bon rendement de réextraction, l'uranium sous forme d'une fluorure permettant une grande vitesse de filtration et suffisante en tout cas pour éviter le recours aux techniques de centrifugation.

### Revendications

1. Procédé de récupération sous la forme d'un fluorure tétravalent de l'uranium contenu dans des solutions phosphatées comportant les étapes suivantes:

a) réduction à l'état tétravalent de l'uranium contenu dans la solution phosphatée,

b) extraction dudit uranium tétravalent de la solution phosphatée au moyen d'un solvant organique choisi parmi les acides alkylpyrophosphoriques dilués dans un hydrocarbure,

c) réextraction de l'uranium tétravalent extrait par le solvant au moyen d'une solution aqueuse d'acide fluorhydrique,

d) séparation du solvant désuranié de l'émulsion formée en (c) et recyclage dudit solvant à l'extraction avec un appoint de solvant frais,

e) récupération du fluorure de la suspension aqueuse obtenue en (d),
caractérisé en ce que dans le but d'obtenir un produit facilement séparable, on introduit des ions sodium dans la solution de réextraction utilisée en (c), à une concentration supérieure à 0,2 g/l.

2. Procédé selon la revendication 1, caractérisé en ce que la solution de réextraction provient du recyclage d'une fraction au moins de la suspension obtenue en (d) à laquelle on a fait un appoint d'acide fluorhydrique et d'ions sodium.

3. Procédé selon la revendication 1, caractérisé en ce que l'on ajoute aux ions sodium au moins un ion métalliques choisi parmi les ions aluminium et magnésium.

4. Procédé selon la revendication 3, caractérisé en ce que la solution de réextraction provient du recyclage d'une fraction au moins de la suspension obtenue en (d) à laquelle on a ajouté un appoint d'acide fluorhydrique, d'ions sodium et d'ions appartenant au groupe constitué par l'aluminium et le magnésium.

5. Procédé selon la revendication 1, caractérisé en ce que la concentration en ions sodium de la solution de réextraction est comprise entre 0,2 et 20 g/l.

6. Procédé selon la revendication 5, caractérisé en ce que la concentration en ions sodium de la solution de réextraction est comprise entre 0,5 et 5 g/l.

7. Procédé selon la revendication 3, caractérisé en ce que la concentration en ions métalliques aluminium et/ou magnésium, de la solution de réextraction est comprise entre 0,05 et 5 g/l.

8. Procédé selon la revendication 7, caractérisé en ce que la concentration totale est comprise entre 0,1 et 1 g/l.

9. Procédé selon la revendication 1, caractérisé en ce que la concentration en acide fluorhydrique de la solution de réextraction est comprise entre 8 et 16% en poids.

10. Procédé selon les revendications 3 et 4, caractérisé en ce que la solution de réextraction contient entre 10 et 300 g/l de solides.

11. Procédé selon la revendication 10, caractérisé en ce que la solution d'acide fluorhydrique contient entre 20 et 150 g/l de solides.

12. Procédé selon la revendication 1, caractérisé en ce que la réextraction de l'uranium s'effectue à une température comprise entre 10 et 30°C.

## Patentansprüche

1. Verfahren zur Rückgewinnung des in phosphathaltigen Lösungen enthaltenen Urans in der Form eines vierwertigen Fluorids, mit den folgenden Schritten:

a) Reduktion des in der phosphathaltigen Lösung enthaltenen Urans in den vierwertigen Zustand,

b) Extraktion des vierwertigen Urans aus der phosphathaltigen Lösung mittels eines unter den in einem Kohlenwasserstoff verdünnten Alkylpyrophosphorsäuren gewählten organischen Lösungsmittels,

c) Reextraktion des durch das Lösungsmittel extrahierten vierwertigen Urans mittels einer wässrigen Fluorwasserstoffsäurelösung,

d) Trennungs des enturanierten Lösungsmittels von der in (c) gebildeten Emulsion und Rückführung dieses Lösungsmittels zur Extraktion mit einer Ergänzung frischen Lösungsmittels,

e) Rückgewinnung von Fluorid aus der in (d) enthaltenen wässrigen Suspension,
dadurch gekennzeichnet, dass man zwecks Erhaltens eines leicht trennbaren Erzeugnisses in die in (c) verwendete Reextraktionslösung Natriumionen in einer Konzentration über 0,2 g/l einführt.

2. Verfahren nach dem Anspruch 1, dadurch gekennzeichnet, dass die Reextraktionslösung von der Rückführung wenigstens eines Teils der in (d) erhaltenen Suspension stammt, die man mit Fluorwasserstoffsäure und Natriumionen ergänzt.

3. Verfahren nach dem Anspruch 1, dadurch gekennzeichnet, dass man den Natriumionen wenigstens ein unter den Aluminium- und Magnesiumionen gewähltes Metallion zusetzt.

4. Verfahren nach dem Anspruch 3, dadurch gekennzeichnet, dass die Reextraktionslösung von der Rückführung wenigstens eines Teils der in (d) erhaltenen Suspension stammt, die man mit Fluorwasserstoffsäure, Natriumionen und zu der aus Aluminium und Magnesium gebildeten Gruppe gehörenden Ionen ergänzt.

5. Verfahren nach dem Anspruch 1, dadurch gekennzeichnet, dass die Natriumionenkonzentration der Reextraktionslösung im Bereich von 0,2 bis 20 g/l liegt.

6. Verfahren nach dem Anspruch 5, dadurch gekennzeichnet, dass die Natriumionenkonzentration der Reextraktionslösung im Bereich von 0,5 bis 5 g/l liegt.

7. Verfahren nach dem Anspruch 3, dadurch gekennzeichnet, dass die Aluminium- und/oder Magnesiummetallionenkonzentration der Reextraktionslösung im Bereich von 0,05 bis 5 g/l liegt.

8. Verfahren nach dem Anspruch 7, dadurch gekennzeichnet, dass die Gesamtkonzentration im Bereich von 0,1 bis 1 g/l liegt.

9. Verfahren nach dem Anspruch 1, dadurch gekennzeichnet, dass die Fluorwasserstoffsäurekonzentration der Reextraktionslösung im Bereich von 8 bis 16 Gew.-% liegt.

10. Verfahren nach den Ansprüchen 3 und 4, dadurch gekennzeichnet, dass die Reextraktionslösung 10 bis 300 g/l Feststoffe enthält.

11. Verfahren nach dem Anspruch 10, dadurch gekennzeichnet, dass die Fluorwasserstoffsäurelösung 20 bis 150 g/l Feststoffe enthält.

12. Verfahren nach dem Anspruch 1, dadurch gekennzeichnet, dass die Reextraktion des Urans bei einer Temperatur im Bereich von 10 bis 30°C erfolgt.

## Claims

1. A process for the recovery in the form of tetravalent fluoride of the uranium contained in phosphate-bearing solutions, comprising the following steps:

a) reduction to the tetravalent state of the uranium contained in the phosphate-bearing solution,

b) extraction of said tetravalent uranium from the phosphate-bearing solution by means of an organic solvent selected from alkylpyrophosphoric acids diluted in a hydrocarbon,

c) re-extraction of the tetravalent uranium extracted by the solvent by means of an aqueous solution of hydrofluoric acid,

d) separation of the solvent from which the uranium has been removed, from the emulsion formed in (c) and recycling of said solvent to the extraction step with a make-up of fresh solvent, and

e) recovery of fluoride from the aqueous suspension obtained in (d),
characterised in that in order to obtain an easily separable product, sodium ions are introduced into the re-extraction solution used in (c), in a concentration of higher than 0.2 g/l.

2. A process according to claim 1, characterised in that the re-extraction solution comes from recycling of a fraction at least of the suspension obtained in (d) to which a make-up of hydrofluoric acid and sodium ions has been added.

3. A process according to claim 1, characterised by adding to the sodium ions at least one metal ion selected from aluminium and magnesium ions.

4. A process according to claim 3, characterised in that the re-extraction solution comes from recycling of a fraction at least of the suspension obtained in (d) to which there has been added a make-up of hydrofluoric acid, sodium ions and ions belonging to the group formed by aluminium and magnesium.

5. A process according to claim 1, characterised in that the concentration of sodium ions in the re-extraction solution is between 0.2 and 20 g/l.

6. A process according to claim 5, characterised in that the level of concentration of sodium ions in the re-extraction solution is between 0.5 and 5 g/l.

7. A process according to claim 3, characterised in that the concentration of aluminium and/or magnesium metal ions in the re-extraction solution is between 0.05 and 5 g/l.

8. A process according to claim 7, characterised in that the total concentration is between 0.1 and 1 g/l.

9. A process according to claim 1, characterised in that the concentration of hydrofluoric acid in the re-extraction solution is between 8 and 16% by weight.

10. A process according to claims 3 and 4, characterised in that the re-extraction solution contains between 10 and 300 g/l of solids.

11. A process according to claim 10, characterised in that the hydrofluoric acid solution contains between 20 and 150 g/l of solids.

12. A process according to claim 1, characterised in that the operation of re-extraction of the uranium is effected at a temperature of between 10 and 30°C.

FIG. 1